# EUROPEAN PATENT APPLICATION

(11) **EP 1 705 386 A2**
(43) Date of publication of application: **27.09.2006**
(21) Application number: 06110861.9
(22) Date of filing: 08.03.2006
(51) Int. Cl.: F16B 7/04

(54) **Assembly for connecting shaped gripping or supporting elements to a bearing structure**

(30) Priority: 15.03.2005 IT VI20050071
(71) Applicant: Malini, Primo Roberto, 36027 Rosa' (VI) (IT)
(72) Inventor: Malini, Primo Roberto, 36027 Rosa' (VI) (IT)
(74) Representative: Bonini, Ercole

(57) **Abstract**

The invention is an assembly (1) for connecting shaped gripping or supporting elements (E) to a bearing structure (S) comprising screwing means (2) associated with the bearing structure (S), complete with a threaded body (3) which projects from the outer wall (Pₑ) of the bearing structure (S), retaining means (4) coupled to the screwing means (2) and inserted in the bearing structure (S) through a hole (F) made in the bearing structure (S) and a bush (5) coupled externally to the threaded body (3) for connecting the shaped gripping or supporting element (E) to the bearing structure (S). The retaining means (4) comprise a shaped head (6) at the end (3a) of the threaded body (3), cooperating in contact with a shaped washer (7), coupled externally to the threaded body (3) and inserted in the bearing structure (S) to bring the shaped washer (7) up against the inner wall (Pᵢ) of the bearing structure (S).

## Description

The present intervention relates to an assembly for connecting shaped gripping or supporting elements to a bearing structure, such as a door wing.

It is common knowledge that coupling or connection assemblies are used to attach shaped gripping or supporting elements, e.g. handles, to a bearing structure, such as the vertical profile of a wing associated with a door.

These connection assemblies are partly associated with the outer wall of the bearing structure and partly inserted inside the hollow body of said bearing structure through a hole made in the latter.

Moreover, the connection assemblies are coupled to at least one of the ends of the shaped gripping or supporting element to associate it with the bearing structure and make it accessible to the user, who can hold it and exert a pulling and/or pushing force thereon.

Several structural solutions for connection assemblies of the aforesaid type are currently available on the market.

According to a first variant of known type, the connection assembly comprises a grub screw, one end of which engages in a female thread cut in a hole passing through a substantially stele-shaped plate.

This plate, coupled to the screw, is inserted with its curved end first in the bearing structure in a sloping direction with respect to the axis of a round through opening created in the wall of the bearing structure.

Once the whole of the shaped plate is inside the bearing structure, the screw is rotated around its longitudinal axis through an angle of 90°.

The shaped plate consequently also undergoes a similar rotation inside the bearing structure, so that one of its sides comes to lie in a plane parallel to the plane defined by the wall of the bearing structure.

Then a brass washer is associated with the outside of the screw at the level of the opening in the bearing structure.

This washer is retained in the aforesaid position owing to the fact that it has a tapered side edge that engages in the through opening made in the bearing structure, which has a corresponding taper.

Moreover, the stable connection between the washer and the bearing structure is achieved by placing a bush up against the outer wall of the bearing structure, said bush having a central threaded hole wherein the end of the screw projecting from the bearing structure engages.

Before coupling the bush to the screw, however, a plastic sealing gasket is placed up against the outer wall of the bearing structure, on the outside of said screw, to prevent any contact between the bush and the bearing structure.

If the bush, which is made of metal, e.g. steel or brass, were installed in direct contact with the bearing structure, which is generally made of wood, aluminium or glass, then with time the latter would suffer from wear.

The end of the previously-mentioned gripping or supporting element is then attached to the bush using fixing means of the type known to a person skilled in the art.

In practical terms, the purpose of the washer is to partially reduce the diameter of the through opening made in the bearing structure, so that the bush comes up against a surface that serves as a rabbet.

The above-described assembly for connecting shaped gripping or supporting elements to a bearing structure presents several significant drawbacks.

The first drawback lies in the particular type of components used for the connection assembly.

In fact, the shaped plate must be large enough to allow the through hole with the female thread to be cut therein.

As a consequence, the through opening in the bearing structure must have a diameter large enough to allow for the passage of the plate, usually 16 mm.

The structural design of the aforementioned components gives rise to the already described need to use the washer to reduce the diameter of the through opening in the bearing structure and provide a surface serving as a rabbet for the bush, thereby inevitably increasing the number of components that make up the connection assembly.

The washer is expensive, moreover, because of the material of which it is made, i.e. brass, and the need to fashion the tapered edge, which obviously also makes it necessary to prepare a similar taper on the through opening in the bearing structure.

The drawbacks described above clearly considerably complicate the installation procedures, even if they are handled by skilled personnel such as a joiner or carpenter.

In addition, on their drilling tools installers usually like to use drill bits that make holes with a diameter of 14 mm in the bearing structure, making it necessary to expand the hole in order to install the connection assembly described above.

Another drawback stems from the fact that the stable connection between the screw and the shaped plate is achieved using screwing means, which are liable to work loose with time due to the continuous traction exerted on the shaped gripping or supporting element by the user.

Thus, after a while, the loads transmitted to the shaped gripping or supporting element tend to have a negative effect on the tightness of its coupling to the bearing structure.

A second type of connection assembly of known type consists of an essentially cylindrical shaped body developed along a longitudinal axis.

This shaped body has a groove that forms the seat for a pin revolvingly coupled to the shaped body, which defines a longitudinal axis at right angles to the longitudinal axis defined by the shaped body.

The ends of the pin are contained inside through holes coaxial to one another and to the longitudinal axis of the pin, drilled in the lateral surface of the shaped body so that said lateral surface provides support for the pin.

The pin has two round holes coaxial to each other passing through the central area of its lateral wall, said holes identifying a longitudinal axis at right angles both to the longitudinal axis of the shaped body and to the longitudinal axis of the pin.

Both round holes have a female thread, in which the end of a grub screw engages, while the previously-described bush for coupling to the shaped gripping or supporting element engages with the opposite end of said grub screw.

The shaped body, with the screw attached, is inserted through the previously described opening made in the bearing structure, so that its longitudinal axis coincides with the axis of the opening and of the screw.

When the shaped body is inside the bearing structure, the screw is rotated through 90° or 180°, depending on the position of the shaped body with respect to the screw when it is first inserted, so that the shaped body comes to lie with its longitudinal axis at right angles to the axis of the screw.

Thus, the shaped body comes up against the inside wall of the bearing structure and thereby assures the stable connection between the bearing structure and the shaped gripping or supporting element.

Here again, of course, a sealing gasket is placed between the bush and the bearing structure in line with the opening.

This connection assembly of known type also presents several acknowledged drawbacks.

A first drawback derives from the fact that, in much the same way as in the previous solution, the stable connection between the screw and the shaped body inserted in the bearing structure is achieved using screwing means that, with time, are inevitably liable to work loose due to wear.

A further drawback of the second type of connection assembly described above lies in its structural complexity, which inevitably has a fallout in terms of a high production cost and selling price.

The present invention aims to overcome the previously-stated drawbacks of the current state of the art.

In particular, the primary object of the invention is to provide an assembly for connecting shaped gripping or supporting elements to a bearing structure that ensures a more stable connection than the connection assemblies of known type.

A second object of the invention is to offer the market a connection assembly of more straightforward design than those of known type, so that the installer can attach a shaped gripping element to a bearing structure more quickly and easily.

The aforesaid objects are achieved through the implementation of an assembly for connecting shaped gripping or supporting elements to a bearing structure that, in accordance with the contents of the first claim, comprises:
- screwing means suitable for being associated with said bearing structure, complete with a threaded body suitable for projecting from the outer wall of said bearing structure;
- retaining means, coupled to said screwing means, suitable for being inserted inside said bearing structure through a hole made in said bearing structure;
- a bush, coupled externally to said threaded body for connecting said shaped gripping or supporting element to said bearing structure;
and is characterized in that said retaining means comprise a shaped head, placed at the end of said threaded body, cooperating in contact with a shaped washer that is coupled externally to said threaded body and inserted in said bearing structure, to bring said shaped washer up against said inner wall of said bearing structure.

The connection assembly of the invention advantageously achieves a more stable connection between a bearing structure and a shaped gripping or supporting element than is provided by connection assemblies of known type.

This is due to the elimination of the screwing means in the coupling between the screw projecting from the bearing structure to engage with the bush and the shaped washer inserted inside the bearing structure.

In practice, the shaped washer of the invention is similar in functional terms to the stele-shaped plate, or the shaped body complete with a pin, described earlier in relation to the connection assemblies of known type, except that in this case there are no threaded parts involved.

By comparison with the known state of the art, the invention also advantageously facilitates the work of the installer of shaped gripping or supporting elements on a bearing structure because it involves the use of fewer components.

As a consequence, there is a reduction in the time it takes to install shaped gripping or supporting elements on a bearing structure by comparison with the known technique.

The aforementioned objects and advantages will be highlighted in greater detail in the following description of a preferred embodiment of the invention, provided as an example with reference to the attached drawings, wherein:
- Figure 1 shows an axonometric exploded view of the connection assembly carried out according to the invention applied to a bearing structure;
- Figure 2 shows an enlarged and rotated axonometric view of some of the parts shown in Figure 1;
- Figure 3 shows a first detail of Figure 2;
- Figure 4 shows a plan view of the detail shown in Figure 3;
- Figure 5 shows a plan view of another detail of Figure 2;
- Figures 6 and 7 show different axonometric views of the second detail of Figure 2.

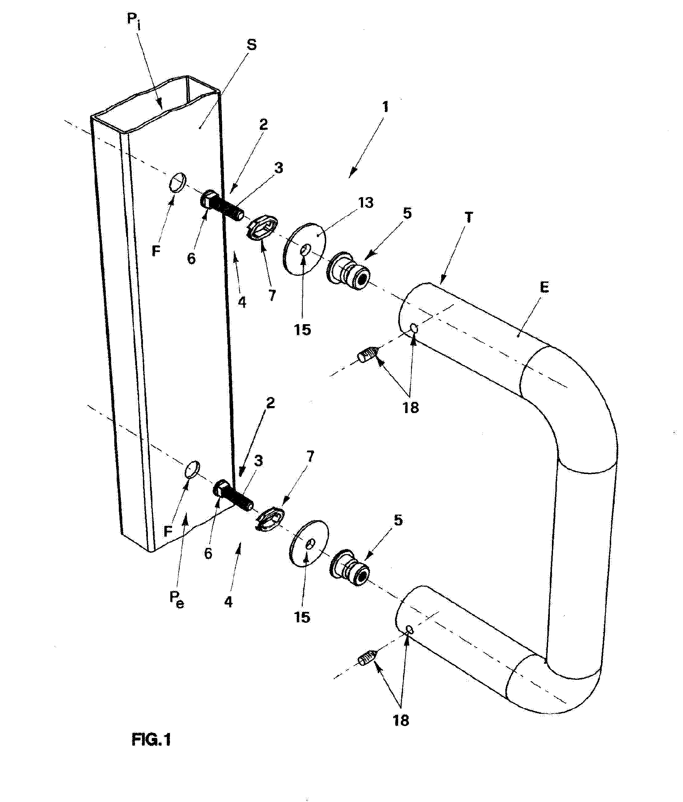

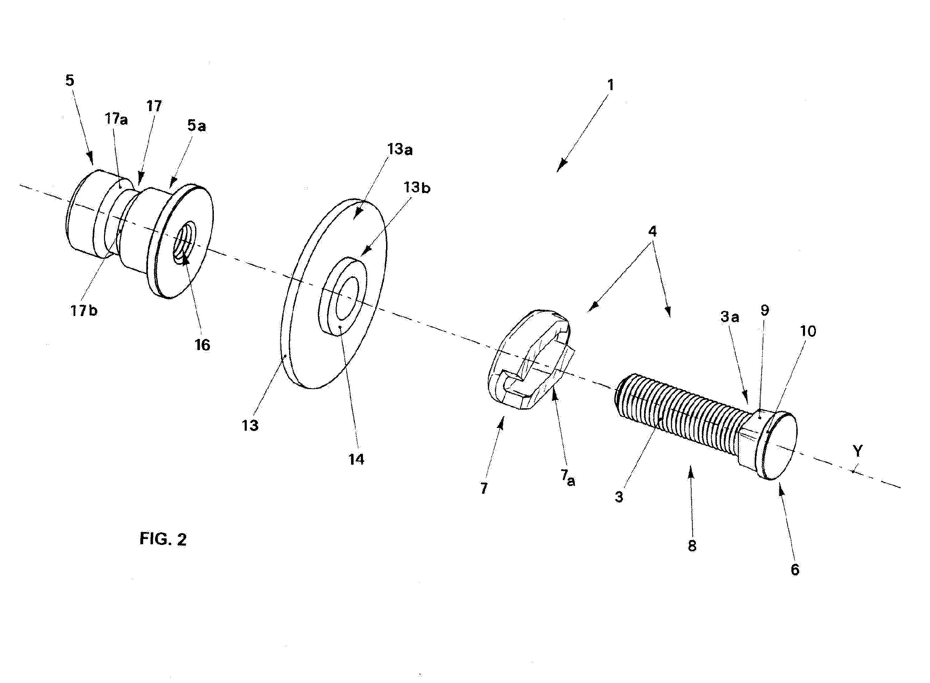

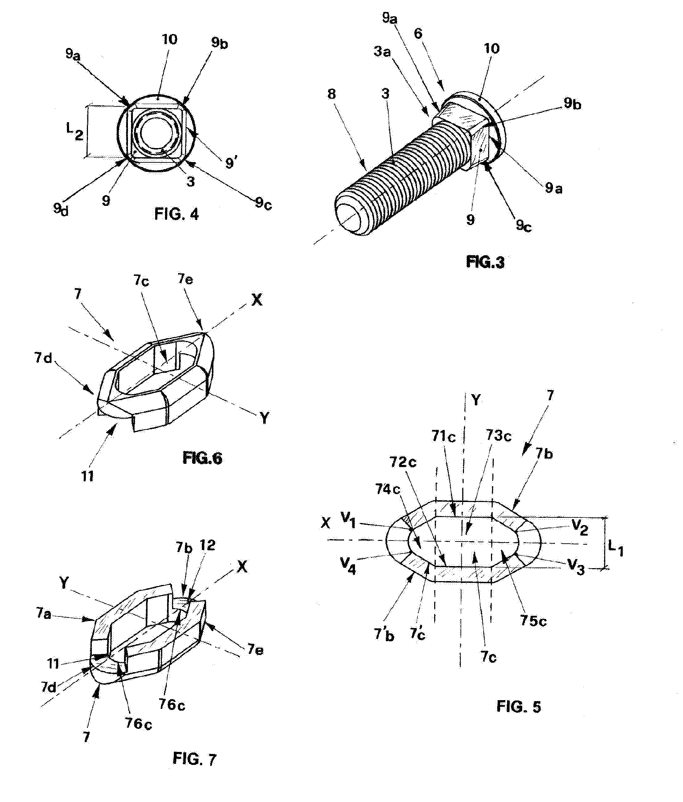

The connection assembly that is the subject of the invention and is illustrated in Figure 1, where it is indicated as a whole by the numeral **1,** is used to couple a shaped gripping or supporting element E to a bearing structure indicated as a whole by **S.**

In the case illustrated here, the gripping or supporting element **E** is a handle and the bearing structure **S** is a door wing.

In other embodiments of the invention, not illustrated herein, the gripping or supporting element may be any type of handle associated with any item of furniture, or with a mobile partition in a room.

Figure 1 shows that the connection assembly **1** comprises:
- screwing means, indicated as a whole by **2,** designed to be associated with the bearing structure **S,** complete with a threaded body **3** projecting from the outer wall **P**_{**e**} of the bearing structure **S;**
- retaining means, indicated as a whole by **4,** coupled to the screwing means **2,** fitted inside the bearing structure **S** through a hole **F** made in the latter;
- a bush **5,** made of a metal such as steel, coupled externally to the threaded body **3** and used to connect the shaped gripping or supporting element **E** to the bearing structure **S.**

According to the invention, the retaining means **4** comprise a shaped head **6,** placed at the end **3a** of the threaded body **3,** cooperating in contact with a shaped washer **7,** coupled externally to the threaded body **3** and inserted in the bearing structure **S,** so that it comes up against the inner wall **P**_{**i**} of the bearing structure **S.**

In the example illustrated herein, the shaped head **6** and the shaped washer **7** are bodies that are clearly distinct and separate from each other, but it is evident that in other embodiments of the invention, not illustrated here, said shaped head and shaped washer could form a single element.

Figure 1 shows that the connection assembly **1** also comprises a sealing gasket **13** that is coupled externally up against the outer wall **P**_{**e**} of the bearing structure **S** so as to come between the outer wall **P**_{**e**} and the bush **5.**

The sealing gasket **13,** preferably but not necessarily made of a plastic material, has a circular crown **14** in the middle, shown in Figure 2, that projects from the side wall **13a** of the sealing gasket **13,** and that snaps in the through hole F made in the bearing structure **S.**

The sealing gasket **13** prevents the bush **5,** and the shaped gripping or supporting element **E** associated therewith, from causing wear on the bearing structure **S** when placed in contact with the latter.

The sealing gasket **13** also serves the purpose of centering the retaining means **4** with respect to the through hole **F.**

The threaded body **3** of the screwing means **2** passes through the circular crown **14** and the hole **15** in the central part **13b** of the sealing gasket **13.**

The bush **5** is a standard component for this type of application, known to a person skilled in the art.

In fact, it has a central threaded hole **16** that develops along the longitudinal axis **Y** of the bush **5,** in which the threaded body **3** of the screwing means **2** engages.

Moreover, on its lateral surface **5a** the bush **5** has a ring-shaped groove **17** limited by sloping side walls **17a, 17b,** preferably at an angle of 45°.

During the installation procedure, the ring-shaped groove **17** in the bush **5** receives means for fixing the shaped element **E** to the bush **5,** said fixing means consisting of a dowel, for instance, as illustrated in Figure 1, where they are indicated as a whole by the numeral **18.**

Figure 2 also shows that the screwing means **2** consist of a screw 8 complete with a shaped head **6** and a threaded body **3.**

The shaped head **6** comprises a substantially square body **9,** connected to the end **3a** of the threaded body **3** of the screw **8** and surrounded by the shaped washer **7,** and a round collar **10,** also illustrated in Figure 3, projecting from the lateral surface **9a** of the square body **9,** which comes up against the outer surface **7a** of the shaped washer **7.**

Figures 3 and 4 show that the square body **9** is in the shape of a truncated cone, the corners **9b, 9c, 9d, 9e** of which are beveled to facilitate insertion in the shaped washer **7.**

Any cross-section of the perimeter of the square body **9** has a profile **9'** substantially defining a first quadrilateral, which is a square in this specific case.

The shaped washer **7,** on the other hand, as shown in the next Figure 5, develops along a main axis of symmetry **X** and a secondary axis of symmetry **Y.**

The edge **7b** around the perimeter and the central through opening **7c,** with a closed profile, of the shaped washer **7** have a polygonal profile, indicated respectively by **7'b** and **7'c.**

To be more precise, the polygonal profile **7'c** of the central opening **7c** in the shaped washer **7** comprises two straight stretches **71c, 72c** of equal length lying parallel and opposite each other.

The length of each of these straight stretches **71c, 72c** defines a second quadrilateral in the middle part **73c** of the central opening **7c** in the shaped washer **7.**

Said second quadrilateral is preferably a rectangle, but in other embodiments of the invention not represented herein it may clearly also be a square, for instance.

The height of said rectangle defined in the central opening **7c** corresponds to a length **L**_{**1**} no less than the length **L**_{**2**} of the side of the square identified by the perimeter of the square body **9** of the shaped head **6.**

The square body **9** of the shaped head **6** is coupled to the shaped washer 7 in line with the middle part **73c** of the central opening **7c.**

Basically, the first quadrilateral consisting of a square, as mentioned previously, and identified by the profile **9'** of the perimeter of the square body **9** matches the second quadrilateral identified by the straight stretches **71c, 72c** in the middle part **73c** of the central opening **7c** in the washer **7.**

According to the preferred embodiment of the invention described herein, the polygonal profile **7'b** and **7'c** of the perimeter edge **7b** and central opening **7c,** respectively, of the shaped washer **7** substantially consists of an octagon, as illustrated in Figure 5.

The octagon develops mainly along the principal axis of symmetry **X,** defining the elongated, substantially elliptic shape of the washer **7.**

The octagon is of irregular type and has four rounded vertices **V**_{**1**}**, V**_{**2**}**, V**_{**3**} and **V**_{**4**}**,** lying symmetrically in pairs opposite one another with respect to the axes of symmetry **X** and **Y.**

Figures 6 and 7 show that the shaped washer **7** has a pair of depressions **11, 12,** each one of which is created at one end **7d, 7e** of the shaped washer **7** on the part of the outer surface **7a** lying opposite the part held up against the inner wall **P**_{**i**} of the bearing structure **S** by the retaining means **4.**

The depressions **11, 12** are arranged symmetrically with respect to the secondary axis of symmetry **Y** of the shaped washer **7** and are delimited, along the main axis of symmetry **X,** by curved surfaces **71b, 76c** belonging respectively to the perimeter edge **7b** and to the central opening **7c** of the shaped washer **7.**

To be more precise, the curved surfaces **76c** belonging to the central opening **7c** in the shaped washer **7** join two opposite pairs of the vertices **V**_{**1**}**, V**_{**2**}**, V**_{**3**} e **V**_{**4**} on either side of the primary axis of symmetry **X,** thereby defining two parts **74c, 75c** of the central opening **7c** that are symmetrical and have a smaller cross section than that of the middle part **73c.**

The curved surfaces **76c** of the central opening 7c have a radius of curvature substantially equating to the radius of the threaded body **3** of the screw **8.**

The purpose of the depressions **11, 12** is to facilitate the insertion of the shaped washer **7** in the bearing structure **S** through the hole **F,** as will become more apparent later on.

During the installation procedure, the operator inserts the shaped head **6** of the screw **8** in the bearing structure **S** through the hole **F.**

Then the operator externally couples the shaped washer **7** to the threaded body **3** of the screw **8,** positioning the depressions **11, 12** so that they face towards the shaped head **6,** and inserts the shaped washer **7** in the bearing structure **S.**

In other applications not illustrated herein, the shaped washer can obviously be coupled to the threaded body even with the outer surface lacking any such depressions and facing towards the shaped head.

Although the dimensions of the shaped washer **7** along the main axis of symmetry **X** are larger than the diameter of the hole **F,** its insertion in the bearing structure **S** is facilitated by the depressions **11, 12** at the ends **7d, 7e** of the shaped washer **7.**

Said insertion is further facilitated by the fact that the threaded body **3** of the screw **8** comes to coincide with the parts **74c, 75c** of the central opening **7c** in the shaped washer **7,** thereby allowing the latter and the screw **8** to be tilted with respect to the axis of the through hole **F.**

The operator then places the sealing gasket **13** up against the outer wall **P**_{**e**} of the bearing structure **S,** coupling it externally to the threaded body **3** of the screw **8** and fitting the circular crown **14** in the through hole **F.**

As a result, the shaped head **6** of the screw **8,** which was previously free to move inside the central opening **7c,** becomes centered with respect to the shaped washer **7,** so that the square body **9** matches the middle part **73c.**

Then the operator screws the bush **5** onto the threaded body **3,** which projects from the outer wall **P**_{**e**} of the bearing structure **S,** permanently fixing the connection assembly **1** to the bearing structure **S** and preparing it to for the attachment of the shaped gripping or supporting element **E**.

The bush **5** is then connected to the end T of the shaped element E using the fixing means **18** which exert a tensile stress on the bush **5** by engaging in a threaded hole made in the shaped element up until they come up against the sloping walls **17a, 17b** of the ring-shaped groove **17.**

By comparison with connection assemblies of known type, the connection assembly carried out according to the invention is better able to withstand the tensile or compressive stress exerted thereon, thus ensuring a more stable connection over time.

This feature derives from the use of a screw with a shaped head that is coupled to a shaped washer, thereby achieving a stable connection with no need for threads in the aforementioned elements, as used in the known solutions.

The invention also facilitates the operator, e.g. a joiner working in the building sector who manufactures and installs doors and windows, in the installation of shaped gripping or supporting elements, such as a door handle, on a bearing structure, thereby reducing the time required and labor costs by comparison with known connection assemblies.

In addition, unlike the case of the known state of the art, when making the through hole in the bearing structure, the operator is free to choose the most suitable diameter of the bit to use in the drilling equipment, which is usually 14 mm, because the retaining means for the connection assembly of the invention can pass through said hole without difficulty.

On the basis of the above description, it is consequently clear that the connection assembly carried out according to the invention achieves the objects and offers the advantages previously stated.

Upon implementation, changes may be made to the connection assembly of the invention, consisting, for instance, in a profile of the perimeter edge of the shaped washer different from the one hitherto described.

The shaped washer may also be made of any type of material generally used in this type of applications, e.g. steel or brass.

In addition, the screwing means, as well as the bush, may differ from those illustrated above, with no bearing on the advantages afforded by the present patent.

All the variants described and mentioned herein, but not illustrated in the attached drawings, are to be considered protected by the present patent, provided that they come within the context of the following claims.

## Claims

1. Assembly (1) for connecting shaped gripping or supporting elements (E) to a bearing structure (S), comprising:
- screwing means (2), suitable for being associated with said bearing structure (S), complete with a threaded body (3) suitable for projecting from the outer wall (Pₑ) of said bearing structure (S);
- retaining means (4), coupled to said screwing means (2), suitable for being placed on the inside of said bearing structure (S) through a hole (F) made in said bearing structure (S);
- a bush (5), coupled externally to said threaded body (3), for connecting said shaped gripping or supporting element (E) to said bearing structure (S),
**characterized in that** said retaining means (4) comprise a shaped head (6) at the end (3a) of said threaded body (3), cooperating in contact with a shaped washer (7) coupled externally to said threaded body (3) and inserted in said bearing structure (S), so as to bring said shaped washer (7) up against said inner wall (Pᵢ) of said bearing structure (S).

2. Connection assembly according to claim 1), **characterized in that** said shaped head and said shaped washer are made in a single piece.

3. Connection assembly (1) according to claim 1), **characterized in that** said shaped head (6) and said shaped washer (7) consist of two distinct and separate pieces.

4. Connection assembly (1) according to claim 1), **characterized in that** said screwing means (2) consist of a screw (8) complete with said shaped head (6) and said threaded body (3).

5. Connection assembly (1) according to claim 4), **characterized in that** said shaped head (6) comprises:
- a substantially square body (9), connected to said end (3a) of said threaded body (3) of said screw (8), surrounded by said shaped washer (7);
- a round collar (10), projecting from the lateral surface (9a) of said square body (9), placed up against the outer surface (7a) of said shaped washer (7).

6. Connection assembly (1) according to claim 5), **characterized in that** said square body (9) has a truncated cone shape and beveled corners (9b, 9c, 9d, 9e) to facilitate the insertion of said square body (9) in said shaped washer (7).

7. Connection assembly (1) according to claim 5), **characterized in that** any cross section of the perimeter of said square body (9) has a profile (9') substantially defining a first quadrilateral.

8. Connection assembly (1) according to claim 7), **characterized in that** said first quadrilateral is a square.

9. Connection assembly (1) according to claim 8), **characterized in that** said shaped washer (7) develops along a principal axis of symmetry (X) and a secondary axis of symmetry (Y) lying at right angles to each other.

10. Connection assembly (1) according to claim 9), **characterized in that** the perimeter edge (7b) and the central through opening (7c) of said shaped washer (7) have a polygonal profile (7'b, 7'c).

11. Connection assembly (1) according to claim 10), **characterized in that** said polygonal profile (7'c) of said central opening (7c) in said shaped washer (7) comprises due straight stretches (71c, 72c) of equal length, lying parallel and opposite each other, the length of each of which defines a second quadrilateral in the middle part (73c) of said central opening (7c) in said shaped washer (7).

12. Connection assembly (1) according to claim 11), **characterized in that** said second quadrilateral is a rectangle.

13. Connection assembly (1) according to claim 12), **characterized in that** the height of said rectangle defined in said central opening (7c) in the shaped washer (7) corresponds to a length (L₁) no less than the length (L₂) of the side of said square defined by said perimeter of said square body (9) of said shaped head (6).

14. Connection assembly (1) according to claim 11), **characterized in that** said square body (9) of said shaped head (6) is coupled to said shaped washer (7) in line with said middle part (73c) of said central opening (7c).

15. Connection assembly (1) according to claim 11), **characterized in that** said polygonal profile (7'b, 7'c) of said perimeter edge (7b) and of said central opening (7c) substantially consists of an octagon.

16. Connection assembly (1) according to claim 15), **characterized in that** said octagon develops mainly along said principal axis of symmetry (X) defining the elongated, substantially elliptic shape of said shaped washer (7).

17. Connection assembly (1) according to claim 16), **characterized in that** said octagon has at least four rounded vertices (V₁, V₂, V₃, V₄), lying symmetrically in pairs opposite one another on either side of said axes of symmetry (X, Y).

18. Connection assembly (1) according to claim 17), **characterized in that** said shaped washer (7) has a pair of depressions (11, 12), each of which is obtained at one end (7d, 7e) of said shaped washer (7) on the part of said outer surface (7a) opposite the part suitable for coming up against said inner wall (Pᵢ) of said bearing structure (S).

19. Connection assembly (1) according to claim 18), **characterized in that** said depressions (11, 12) are symmetrical with respect to said secondary axis of symmetry (Y) and are delimited along said main axis of symmetry (X) by curved surfaces (71 b, 76c) belonging to said perimeter edge (7b) and to said central opening (7a) of said shaped washer (7).

20. Connection assembly (1) according to claim 19), **characterized in that** said curved surfaces (76c) belonging to said central opening (7c) in said shaped washer (7) join two opposite pairs of said vertices (V₁, V₂, V₃, V₄) on either side said primary axis of symmetry (X), thereby defining two parts (74c, 75c) of said central opening (7c) that are symmetrical and have a smaller cross section than that of said middle part (73c).

21. Connection assembly (1) according to claim 20), **characterized in that** said curved surfaces (76c) of said central opening (7c) have a radius of curvature substantially equal to the radius of said threaded body (3).

22. Connection assembly (1) according to claim 1), **characterized in that** it comprises a sealing gasket (13), suitable for being coupled externally up against said outer wall (Pₑ) of said bearing structure (S) so as to come between said outer wall (Pₑ) of said bearing structure (S) and said bush (5).

23. Connection assembly (1) according to claim 22), **characterized in that** said sealing gasket (13) is complete with a circular crown (14) in the middle that projects from the lateral surface (13a) of said sealing gasket (13) and is suitable for snapping inside said through hole (F) made in said bearing structure (S).

24. Connection assembly (1) according to claim 23), **characterized in that** said threaded body (3) is inserted through said circular crown (14) and the hole (15) made in the central part (13b) of said sealing gasket (13).
